# EUROPEAN PATENT APPLICATION

(11) **EP 3 748 912 A1**
(43) Date of publication of application: **09.12.2020**
(21) Application number: 19179059.1
(22) Date of filing: 07.06.2019
(51) Int. Cl.: H04L 12/26, H04L 12/801, H04L 29/06

(54) **SYSTEM AND METHOD FOR MONITORING AND ANALYZING A DATA FLOW IN A NETWORK**

(71) Applicant: Rohde & Schwarz GmbH & Co. KG, 81671 München (DE)
(72) Inventor: Dienelt, Anja, 04509 Delitzsch (DE); Dermot, Allen, 9473 Gams (CH); Seidel, Felix, 12161 Berlin (DE); Racine, Joana, 9008 St. Gallen (CH); Schneider, Jonathan, 12683 Berlin (DE); Goldschmid, Matteo, 3250 Lyss (CH); Nack, Tobias, 14482 Potsdam (DE)
(74) Representative: Rupp, Christian

(57) **Abstract**

A system 100 for monitoring and analyzing a data flow in a network 101, wherein the system 100 comprises: a network probe 102 connected to the network 101 and configured to obtain network traffic corresponding to a network node 103 of the network 101; a packet analyzing unit 104 configured to analyze the network traffic to obtain an analyzing result 105; and a visualization unit 106 configured to visualize a representation 107 of the network node 103 and a representation 108 of a network connection 109 of the network node 103 based on the analyzing result 105; wherein the visualization unit 106 is further configured to visualize a status and/or a type of the network node 103 and/or the network connection 109 based on highlighting and/or color coding.

## Description

The invention relates to monitoring and analyzing of data in a computer network. More specifically, the present invention relates to indicating a status or a type of a network node or a network connection to a user. In particular, network anomalies or security incidents can be indicated, e.g. in a factory or an industry 4.0 environment.

Conventional solutions for monitoring and analyzing a computer network allow for obtaining information about a security incident in the computer network. For example, US 9973430 B2 discloses a method and an apparatus for deep packet inspection for network intrusion detection. The information provided by these conventional solutions is intended for a system administrator or a computer scientist who has experience in the field of IT security. In an industry 4.0 environment (such as a factory), a production manager who is responsible for a manufacturing execution system (MES) is not experienced in IT security but needs to be informed about security incidents and be able to take countermeasures. However, due to the complexity of an MES which includes a computer network, this is difficult an involves high costs.

The object of the invention is to provide a system for monitoring and analyzing a data flow in a network, which effectively and efficiently visualizes a status and/or a type of a network node or network connection in the network, e.g. to a user such as a production manager. Moreover, the object is to provide an according method.

The object is solved by the features of the first independent claim for the system and by the features of the second independent claim for the method. Further, it is solved by the features of an associated computer program. The dependent claims contain further developments.

An inventive system for monitoring and analyzing a data flow in a network comprises: a network probe connected to the network and configured to obtain network traffic corresponding to a network node of the network; a packet analyzing unit configured to analyze the network traffic to obtain an analyzing result; and a visualization unit configured to visualize a representation of the network node and a representation of a network connection of the network node based on the analyzing result; wherein the visualization unit is further configured to visualize a status and/or a type of the network node and/or the network connection based on highlighting and/or color coding.

This is beneficial, because visualizing the status or the type of the network node or the network connection based on highlighting or color coding allows for effective and efficient signaling of a system state to a user. This also enables to automatically highlight network flows, vulnerabilities and machine status.

In particular, a data flow comprises a set of packets with common characteristics.

In particular, the characteristics include at least one of: a source IP, a destination IP, a protocol type, a multicast group, a broadcast domain.

In particular, network traffic that corresponds to a network node is network traffic that is sent or received by the network node.

In particular, the packet analyzing unit is configured to apply deep packet inspection to analyze the network traffic and to obtain an analyzing result.

In particular, deep packet inspection is a method in network technology for monitoring and/or filtering data packets. At the same time, the data part and the header part of the data packet can be examined for specific features such as protocol violations, computer viruses, spam and other unwanted content.

In particular, the network probe is a passive network probe. In particular, the network probe is implemented using port mirroring or an optical splitter.

In particular, the packet analyzing unit is configured to analyze all traffic that is processed in the computer network

In particular, the visualization unit is configured to perform visualization in real time.

In particular, highlighting comprises attracting a user's attention based on a visual indication or alert. In particular, color coding comprises visualizing the status and/or type using at least one predefined color.

Advantageously and preferably, the network is a packet oriented network.

This is beneficial, since a packet oriented network, which is often used in MES, can be analyzed by the system.

In particular, the network is a computer network. In particular, the network traffic includes a network packet.

In particular, only a predefined subset of network connections can be visualized. That is, that system can be configured to only show unusual network connections.

Advantageously and preferably, the visualization unit is further configured to visualize the representation of the network node in spatial arrangement to other nodes.

This is beneficial as it supports a user in determining a geographic position of the network node if which a status or type is visualized.

In particular, the visualization unit is configured to visualize the representation of the network node on a floor plan and/or a map. In particular, the spatial arrangement is indicated by the floor plan and/or the map. In particular, the spatial arrangement is based on a real world scenario, e.g. on the arrangement of machines (that e.g. comprise network nodes) in a factory. In particular, the floor plan or map may be segmented into security zones Advantageously and preferably, the visualization unit is further configured to obtain an image or a video, and to visualize the representation of the network node, the representation of the network connection, the status, or the type as an overlay of the image or the video.

This is beneficial as the position of the network node can even more easily be located by means of the overlaid picture or video.

In particular, the image or the video shows a spatial arrangement of network nodes, more specifically a view of network nodes on a floor of a factory.

Advantageously and preferably, the overlay is generated using an augmented reality mechanism.

This is beneficial as it guarantees high quality of the overlay.

Advantageously and preferably, the system further comprises data glasses configured to obtain the image or the video, and to output the overlay.

This is beneficial as a convenient way is provided to a user to obtain the visualized information.

In particular, data glasses (also called smart glasses) are wearable devices that add information to a user's field of vision. They enable augmented reality or mixed reality.

Advantageously and preferably, the visual representation of the network node and/or the visual representation of the network connection includes a context menu.

This is beneficial as even more information can be presented by means of the context menu, in particular in a structured manner.

Advantageously and preferably, the context menu comprises information regarding the related network node or network connection.

This is beneficial as even more information can be presented to a user in an efficient and effective way.

In particular, the information regarding the related network node or network connection includes at least one of: protocol, encryption, address, running application, anomaly history.

Advantageously and preferably, the visualization unit is further configured to determine whether a status and/or a type of the network node and/or the network connection complies with a predefined rule, and to visualize the status and/or the type based on the result of the determination.

This is beneficial as also the compliance of network traffic with rules can be presented.

In particular, the rule is a security rule and/or an anomaly rule. In particular, the rule can be obtained by user input or by a network connection.

In particular, the visualization unit is able to store security / anomaly rules for data flows and show connections fulfilling the rules and not fulfilling the rules based on color coding or highlighting.

Advantageously and preferably, the visualization unit is further configured to visualize at least one data flow corresponding to an application executed by the network node or corresponding to data received from an external network, based on the analyzing result.

This is beneficial, as information is visualized in a more fine grained manner (i.e. on a data-flow or application level).

In particular, the at least one flow is visualized based on highlighting and/or color coding. In particular, the external network is separated from the network by a router or firewall. In particular, the external network relates to the internet. In particular, the at least one data flow is a flow between two nodes of the network.

Advantageously and preferably, the visualization unit is further configured to visualize the at least one data flow based on a protocol layer of the at least one data flow.

This is beneficial, as information is visualized in a more fine grained manner (i.e. on protocol layer level).

In particular, highlighting and/or color coding of the at least one flow is based on the protocol layer.

Advantageously and preferably, the system further comprises a processing unit, and the packet analyzing unit is further configured to obtain anomaly information relating to the network node and/or the network connection, based on the analyzing result, and to provide the anomaly information to the processing unit.

This is beneficial as the packet analyzing unit can also provide anomaly information for further processing in the processing unit.

In particular, the anomaly information includes information regarding a network anomaly and/or a security incident in the plurality of network packets.

In particular, the anomaly information relates to a network flow in the network.

Advantageously and preferably, the processing unit is further configured to obtain an anomaly fixing instruction from a database of the system based on the anomaly information and to provide the anomaly fixing instruction to a user, or to apply the anomaly fixing instruction to the system.

This is beneficial, as a user can be guided to take countermeasures against a network incident, or as the countermeasures even can be taken automatically.

In particular, the anomaly fixing instruction is machine learned based on previous anomaly data or network security incidents.

This ensures that a system can be provided which uses artificial intelligence (AI) to detect and respond to cyberattacks (e.g. by blocking them, or by diverting them into a sandbox or honeypot). In order to trust the AI, a user can see reports of which actions were taken by the AI. A user is are able to manually override these actions. This combines human decision making with automated data analysis (network flow segmentation).

In particular, the database comprises several sets of anomaly information, anomaly fixing instruction, and a corresponding fixing result. In particular, the anomaly fixing instruction is further obtained based on a desired fixing result.

In particular, the anomaly fixing instruction includes instructions for a user how to fix a network anomaly or security incident. In particular, the anomaly fixing instruction includes instructions for the processing unit (e.g. an algorithm) to fix a network anomaly or security incident.

In particular, the processing unit is configured to indicate consequences for a network node in the anomaly fixing instruction, based on the anomaly information. A consequence e.g. includes that a production line stops or is in a slower redundancy mode, if a network node is made offline due to a network anomaly or security incident.

Advantageously and preferably, the visualization unit is further configured to notify a predefined user based on the determination result according to the predefined rule, and/or the processing unit is further configured to notify a predefined user based on the anomaly information.

This is beneficial, as a predefined user can efficiently and effectively be informed about a security incident or a network anomaly.

An inventive method for monitoring and analyzing a data flow in a network comprises the steps of obtaining, by a network probe of a system, network traffic corresponding to a network node of the network, wherein the network probe is connected to the network; analyzing, by a packet analyzing unit of the system, the network traffic to obtain an analyzing result; visualizing, by a visualization unit of the system, a representation of the network node and a representation of a network connection of the network node based on the analyzing result; and visualizing, by the visualization unit, a status and/or a type of the network node and/or the network connection based on highlighting and/or color coding.

The inventive method comprises the same advantages as the inventive device.

An inventive computer program comprises program code for performing the previously described method, when the computer program runs on a computer or a digital signal processor.

The inventive computer program comprises the same advantages as the inventive device.

An exemplary embodiment of the invention is now further explained with respect to the drawings by way of examples only, in which
- FIG. 1: shows a schematic view of a system according to an embodiment of the present invention;
- FIG. 2: shows a schematic view of a system according to an embodiment of the present invention in more detail;
- FIG. 3: shows a schematic view of an operating scenario of the present invention;
- FIG. 4: shows another schematic view of an operating scenario of the present invention;
- FIG. 5: shows a schematic view of a method according to an embodiment of the present invention.

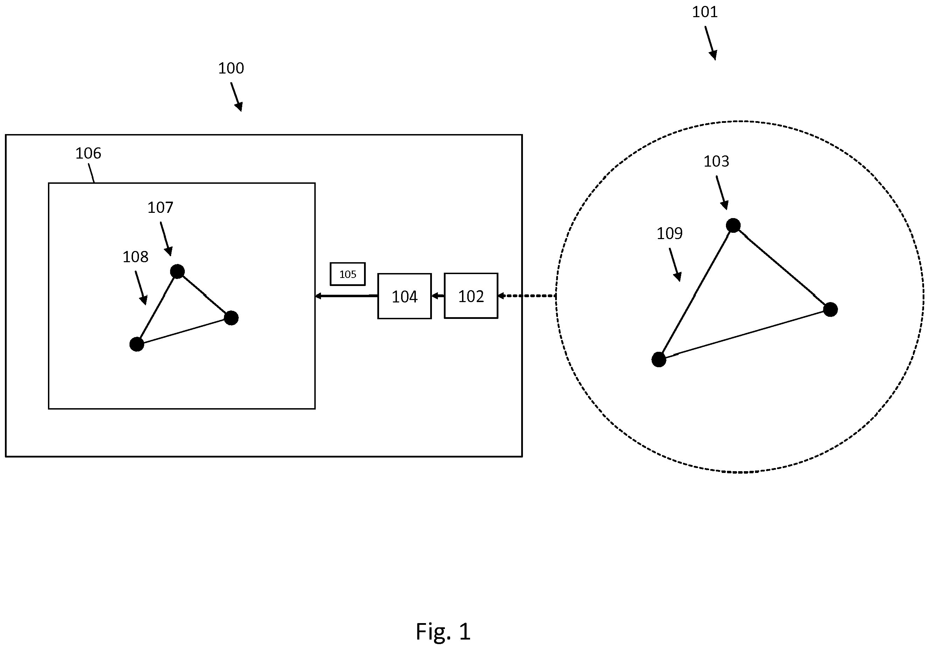

FIG. 1 shows a system 100 for monitoring and analyzing a data flow in a network 101. As illustrated, the system 100 comprises a network probe 102, a packet analyzing unit 104 and a visualization unit 106.

The network probe 102 is connected to the network 101 and configured to obtain network traffic corresponding to a network node 103 of the network 101. That is, the network 101 and the network node 103 are external to the system 100.

The network traffic which is obtained by the network probe 102 is analyzed by the packet analyzing unit 104 to obtain an analyzing result 105. This can e.g. be done by deep packet inspection.

The visualization unit 106 visualizes a representation 107 of the network node 103 and a representation 108 of a network connection 109 of the network node 103 based on the analyzing result 105. The network node 103 can generally be any communication node, but e.g. also be a manufacturing device in a factory. The network connection 109 may be any kind of network connection connecting manufacturing devices in a factory.

To indicate or visualize a status and/or a type of the network node 103 and/or the network connection 109 to a user, the visualization unit 106 implements highlighting and/or color coding. That is, an analyzing result of the network is output by means of highlighting or color coding, by which a user can be easily informed about a status and or type. The highlighting and/or color coding thereby depends on the status and/or type.

The representation 107 of the network node 103 and the representation 108 of a network connection 109 of the network node 103 may e.g. be output on a display, where a user can recognize them.

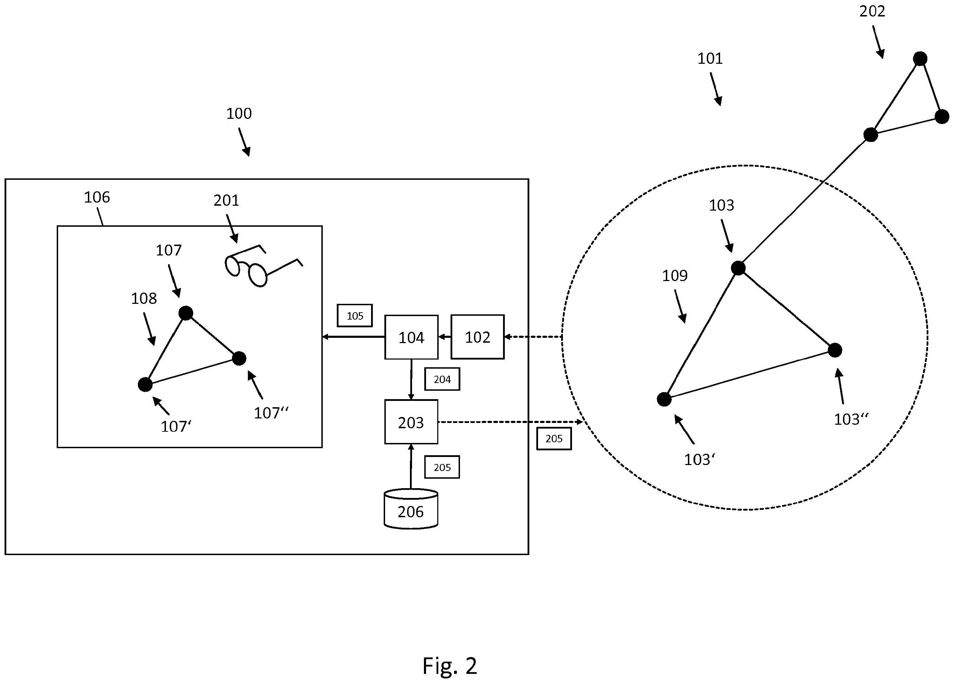

FIG. 2 shows the system 100 in more detail. The system 100 described in FIG. 2 includes all features and functionality of the system 100 of FIG. 1. Therefore, corresponding features are labeled with identical reference signs.

As shown in FIG. 2, the system 100 optionally further includes data glasses 201 (also called smart glasses) which can be used to display the content output by the visualization unit 104. That is, the data glasses 201 can display the representation 107 of the network node 103 and the representation 108 of a network connection 109 of the network node 103, as well as the highlighting and color coding.

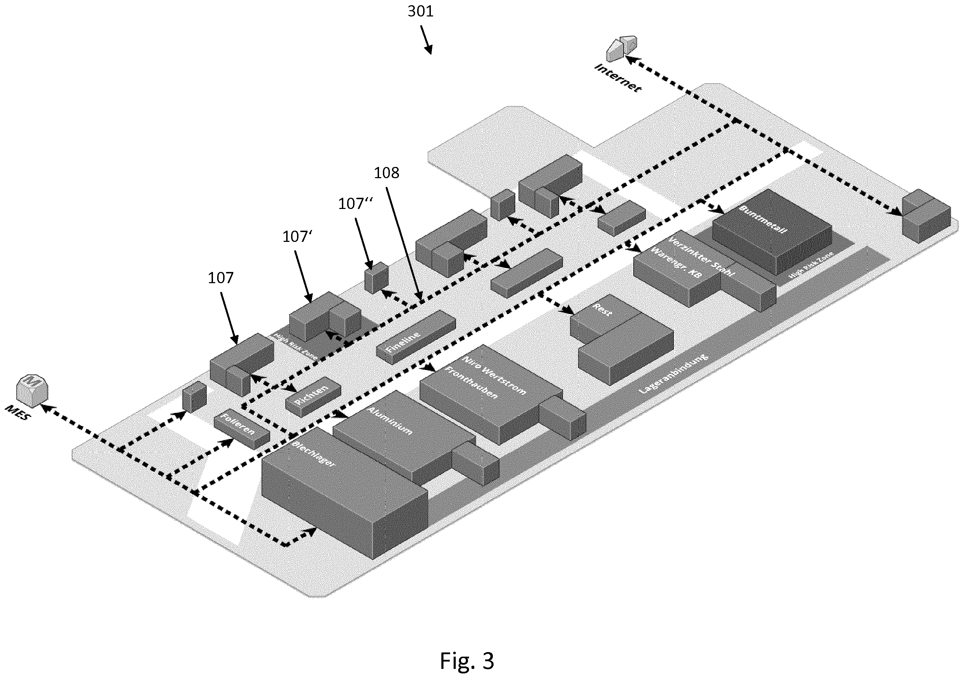

The visualization unit 106 can obtain an image or a video, and visualize the representation 107 of the network node 103, the representation 108 of the network connection 109, the status, or the type as an overlay of the image or the video. The image can e.g. be an image of a factory floor, or a map, as it is going to be described in FIG. 3 below.

The image or video can be obtained by the visualization unit 106 e.g. by means of user input (via an external camera). The image or video can also be obtained by means of the data glasses 201. To this end, the data glasses can comprise a camera.

In case that the visualization unit includes the data glasses 201, the data glasses 201 can also be used to output the overlay.

Optionally, the visualization unit 106 can visualize at least one data flow corresponding to an application executed by the network node 103.

Additionally or alternatively, the visualization unit 106 can visualize a data flow corresponding to data received from an external network 202, as illustrated in FIG. 2.

The external network 202 can e.g. be the internet, to which the network 101 can be connected. The at least one data flow can be visualized based on a protocol layer of the at least one data flow.

As it is illustrated in FIG. 2, the system 100 can optionally comprise a processing unit 203. In this case, the packet analyzing unit 104 can obtain anomaly information relating to the network node 103 and/or the network connection 109, and to provide the anomaly information 204 to the processing unit 203.

The system 100 optionally can include a database 206 from which the processing unit 203 can obtain an anomaly fixing instruction 205 based on the anomaly information 204.

The processing unit 203 then provides the anomaly fixing instruction 205 to a user, or applies the anomaly fixing instruction 205 to the network 101, or nodes 103 of the network.

FIG. 3 shows a schematic view of an operating scenario according to the present invention. In FIG. 3, a visual representation 107 of the network node 103 in spatial arrangement to other nodes 107', 107" (i.e. to their representations) is shown. Such a visualization can be output by the visualization unit 106. In particular, the output of the visualization unit 106 is shown as an overlay over an image 301 of a factory floor. The image 301 also shows a visual representation 108 of a network connection 109.

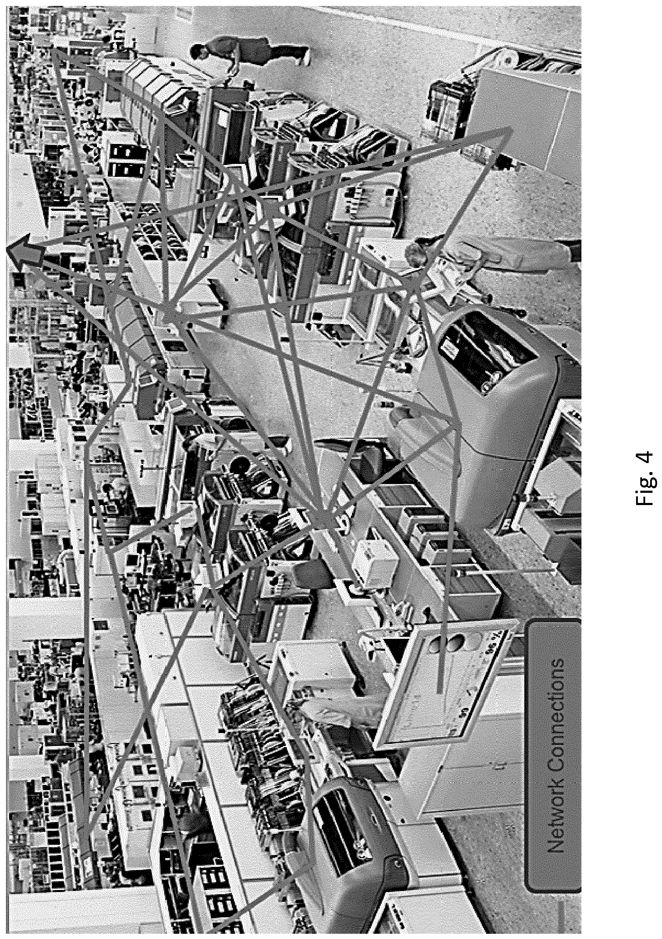

FIG. 4 shows another schematic view of an operating scenario according to the present invention. In FIG. 4, manufacturing devices on a factory floor are shown. Each manufacturing device can include a network node 103 as described above. In FIG. 4, lines connecting these devices are shown as an overlay. These lines are representations 108 of network connections 109. The nodes at which the lines meet are representations 107 of network nodes 103. In other words, FIG. 4 shows an overlay of the representations over an image of a factory floor, which is generated by means of an augmented reality mechanism.

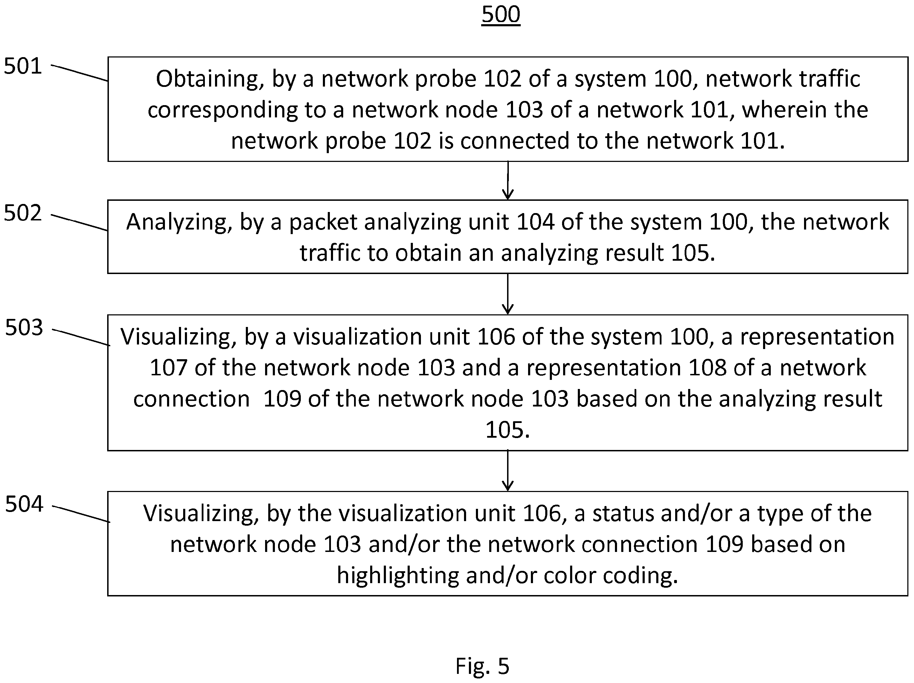

FIG. 5 schematically shows a method 500 according to an embodiment of the present invention. The method 500 is for monitoring and analyzing a data flow in a network 101. Therefore, the method 500 comprises a step of obtaining 501, by a network probe 102 of a system 100, network traffic corresponding to a network node 103 of the network 101, wherein the network probe 102 is connected to the network 101. The method 500 further comprises a step of analyzing 502, by a packet analyzing unit 104 of the system 100, the network traffic to obtain an analyzing result 105. The method further comprises a step of visualizing 503, by a visualization unit 106 of the system 100, a representation 107 of the network node 103 and a representation 108 of a network connection 109 of the network node 103 based on the analyzing result 105. The method 500 comprises a last step of visualizing 504, by the visualization unit 106, a status and/or a type of the network node 103 and/or the network connection 109 based on highlighting and/or color coding.

It is important to note that the inventive system and method very closely correspond. Therefore, all of the above said regarding the system is also applicable to the method. Everything which is described in the description and/or claimed in the claims and/or drawn in the drawings can be combined.

The invention is not limited by the examples and especially not by a specific number of network nodes 103 or network connections 109. The characteristics of the exemplary embodiments can be used in any advantageous combination.

## Claims

1. A system (100) for monitoring and analyzing a data flow in a network (101), wherein the system (100) comprises:
- a network probe (102) connected to the network (101) and configured to obtain network traffic corresponding to a network node (103) of the network (101);
- a packet analyzing unit (104) configured to analyze the network traffic to obtain an analyzing result (105); and
- a visualization unit (106) configured to visualize a representation (107) of the network node (103) and a representation (108) of a network connection (109) of the network node (103) based on the analyzing result (105);
wherein the visualization unit (106) is further configured to visualize a status and/or a type of the network node (103) and/or the network connection (109) based on highlighting and/or color coding.

2. The system (100) according to claim 1, wherein the network (101) is a packet oriented network.

3. The system (100) according to claim 1 or 2, wherein the visualization unit (106) is further configured to visualize the representation (107) of the network node (103) in spatial arrangement to other nodes (107', 107").

4. The system (100) according to any one of the preceding claims, wherein the visualization unit (106) is further configured to obtain an image (301) or a video, and to visualize the representation (107) of the network node (103), the representation (108) of the network connection (109), the status, or the type as an overlay of the image (301) or the video.

5. The system (100) according to any one of the preceding claims, wherein the overlay is generated using an augmented reality mechanism.

6. The system (100) according to claim 5, further comprising data glasses (201) configured to obtain the image or the video, and to output the overlay.

7. The system (100) according to any one of the preceding claims, wherein the representation (107) of the network node (103) and/or the representation (108) of the network connection (109) includes a context menu.

8. The system (100) according to claim 7, wherein the context menu comprises information regarding the related network node (103) or network connection (109).

9. The system (100) according to any one of the preceding claims, wherein the visualization unit (106) is further configured to determine whether a status and/or a type of the network node (103) and/or the network connection (109) complies with a predefined rule, and to visualize the status and/or the type based on the result of the determination.

10. The system (100) according to any one of the preceding claims, wherein the visualization unit (106) is further configured to visualize at least one data flow corresponding to an application executed by the network node (103) or corresponding to data received from an external network (202), based on the analyzing result (105) .

11. The system (100) according to claim 10, wherein the visualization unit (106) is further configured to visualize the at least one data flow based on a protocol layer of the at least one data flow.

12. The system (100) according to any one of the preceding claims, wherein the system (100) further comprises a processing unit (203), and wherein the packet analyzing unit (104) is further configured to obtain anomaly information relating to the network node (103) and/or the network connection (109), based on the analyzing result (105), and to provide the anomaly information (204) to the processing unit (203).

13. The system (100) according to any one of the preceding claims, wherein the processing unit (203) is further configured to obtain an anomaly fixing instruction (205) from a database (206) of the system (100) based on the anomaly information (204) and to provide the anomaly fixing instruction (205) to a user, or to apply the anomaly fixing instruction (205) to the network (101).

14. The system (100) according to any one of the preceding claims, wherein the visualization unit (106) is further configured to notify a predefined user based on the determination result according to the predefined rule, and/or
wherein the processing unit (203) is further configured to notify a predefined user based on the anomaly information (204) .

15. A method (500) for monitoring and analyzing a data flow in a network (101), wherein the method (500) comprises the steps of:
- obtaining (501), by a network probe (102) of a system (100), network traffic corresponding to a network node (103) of the network (101), wherein the network probe (102) is connected to the network (101);
- analyzing (502), by a packet analyzing unit (104) of the system (100), the network traffic to obtain an analyzing result (105);
- visualizing (503), by a visualization unit (106) of the system (100), a representation (107) of the network node (103) and a representation (108) of a network connection (109) of the network node (103) based on the analyzing result (105); and
- visualizing (504), by the visualization unit (106), a status and/or a type of the network node (103) and/or the network connection (109) based on highlighting and/or color coding.

## Amended claims

### Amended claims in accordance with Rule 137(2) EPC.

1. A system (100) for monitoring and analyzing a data flow in a network (101), wherein the system (100) comprises:
- a network probe (102) connected to the network (101) and configured to obtain network traffic corresponding to a network node (103) of the network (101);
- a packet analyzing unit (104) configured to analyze the network traffic to obtain an analyzing result (105); and
- a visualization unit (106) configured to visualize a representation (107) of the network node (103) and a representation (108) of a network connection (109) of the network node (103) based on the analyzing result (105); wherein the visualization unit (106) is further configured to visualize a status or a type of the network node (103) or the network connection (109) based on highlighting or color coding; wherein
- the visualization unit (106) is configured to visualize the representation (107) of the network node (103) in spatial arrangement to other nodes (107', 107"); wherein
- the visualization unit is configured to visualize the representation of the network node on a floor plan or a map, and wherein the spatial arrangement is indicated by the floor plan or the map.

2. The system (100) according to claim 1, wherein the network (101) is a packet oriented network.

3. The system (100) according to any one of the preceding claims, wherein the visualization unit (106) is further configured to obtain an image (301) or a video, and to visualize the representation (107) of the network node (103), the representation (108) of the network connection (109), the status, or the type as an overlay of the image (301) or the video.

4. The system (100) according to any one of the preceding claims, wherein the overlay is generated using an augmented reality mechanism.

5. The system (100) according to claim 4, further comprising data glasses (201) configured to obtain the image or the video, and to output the overlay.

6. The system (100) according to any one of the preceding claims, wherein the representation (107) of the network node (103) or the representation (108) of the network connection (109) includes a context menu.

7. The system (100) according to claim 6, wherein the context menu comprises information regarding the related network node (103) or network connection (109).

8. The system (100) according to any one of the preceding claims, wherein the visualization unit (106) is further configured to determine whether a status or a type of the network node (103) or the network connection (109) complies with a predefined rule, and to visualize the status or the type based on the result of the determination.

9. The system (100) according to any one of the preceding claims, wherein the visualization unit (106) is further configured to visualize at least one data flow corresponding to an application executed by the network node (103) or corresponding to data received from an external network (202), based on the analyzing result (105) .

10. The system (100) according to claim 9, wherein the visualization unit (106) is further configured to visualize the at least one data flow based on a protocol layer of the at least one data flow.

11. The system (100) according to any one of the preceding claims, wherein the system (100) further comprises a processing unit (203), and wherein the packet analyzing unit (104) is further configured to obtain anomaly information relating to the network node (103) or the network connection (109), based on the analyzing result (105), and to provide the anomaly information (204) to the processing unit (203).

12. The system (100) according to any one of the preceding claims, wherein the processing unit (203) is further configured to obtain an anomaly fixing instruction (205) from a database (206) of the system (100) based on the anomaly information (204) and to provide the anomaly fixing instruction (205) to a user, or to apply the anomaly fixing instruction (205) to the network (101).

13. The system (100) according to any one of the preceding claims, wherein the visualization unit (106) is further configured to notify a predefined user based on the determination result according to the predefined rule, or wherein the processing unit (203) is further configured to notify a predefined user based on the anomaly information (204) .

14. A method (500) for monitoring and analyzing a data flow in a network (101), wherein the method (500) comprises the steps of:
- obtaining (501), by a network probe (102) of a system (100), network traffic corresponding to a network node (103) of the network (101), wherein the network probe (102) is connected to the network (101);
- analyzing (502), by a packet analyzing unit (104) of the system (100), the network traffic to obtain an analyzing result (105);
- visualizing (503), by a visualization unit (106) of the system (100), a representation (107) of the network node (103) and a representation (108) of a network connection (109) of the network node (103) based on the analyzing result (105); and
- visualizing (504), by the visualization unit (106), a status or a type of the network node (103) or the network connection (109) based on highlighting or color coding; wherein the method further comprises
- visualizing, by the visualization unit (106), the representation (107) of the network node (103) in spatial arrangement to other nodes (107', 107");
- visualizing, by the visualization unit (106), the representation of the network node on a floor plan or a map; and
wherein the spatial arrangement is indicated by the floor plan or the map.
